# EUROPEAN PATENT SPECIFICATION

(11) **EP 4 151 556 B1**
(45) Date of publication and mention of the grant of the patent: **08.10.2025**
(21) Application number: 21923600.7
(22) Date of filing: 29.07.2021
(51) Int. Cl.: B65G 1/00, G06Q 10/04, G06Q 10/08, G06Q 10/047, G06Q 10/0835, B65G 61/00

(54) **DELIVERY CONTROL SYSTEM, DELIVERY CONTROL DEVICE, AND DELIVERY CONTROL METHOD**
AUSGABESTEUERUNGSSYSTEM, AUSGABESTEUERUNGSVORRICHTUNG UND AUSGABESTEUERUNGSVERFAHREN
SYSTÈME DE COMMANDE DE LIVRAISON, DISPOSITIF DE COMMANDE DE LIVRAISON ET PROCÉDÉ DE COMMANDE DE LIVRAISON

(43) Date of publication of application: 22.03.2023
(73) Proprietor: Rakuten Group, Inc., Setagaya-ku Tokyo 158-0094 (JP)
(72) Inventor: TAZUME, Toshiaki, Tokyo 158-0094 (JP)
(74) Representative: EIP
(86) International application number: PCT/JP2021/028105
(87) International publication number: WO 2023/007653

(56) References cited:
- JP-B1- 6 779 396
- US-A1- 2019 287 062
- US-A1- 2020 327 491
- US-A1- 2021 065 106
- US-A1- 2021 065 114
- US-A1- 2021 090 025
- YOSHINOBU KATO, NOBUKO KOBAYASHI: "More luggage! Not enough people! Logistics sites saved by robots ", NIKKEI JOHO STRATEGY - NIKKEI INFORMATION STRATEGY, NIKKEI BP-SHA, TOKYO, JP, vol. 25, no. 9 (294), 1 October 2016 (2016-10-01), JP , pages 18 - 33, XP009540661, ISSN: 0917-5342

## Description

### TECHNICAL FIELD

The embodiments of the present disclosure relate to a delivery control system, a delivery controller, and a delivery control method.

### BACKGROUND ART

A technology of delivering an item (e.g., baggage) using a delivery machine (e.g., a movable body) is conventionally known (for example, Patent Literature 1).
Patent Literature 2 relates to presenting delivery locations of packages for users to a delivery vehicle. Patent Literature 3 relates to deployment and use of an autonomous transport system.

### CITATION LIST

### Patent Literature

Patent Literature 1: PCT Publication No. 2018/216502
Patent Literature 2: US 2020/327491 A1
Patent Literature 3: US 2019/287062 A1

### SUMMARY OF INVENTION

### Technical Problem

When multiple users to which items are respectively delivered are located close to one another, the delivery machine moves to deliver each item to the corresponding user, and the delivery efficiency decreases.

### Solution to Problem

A delivery control system that solves the above-described problem includes a determination unit that uses receiving position determining information to determine a common receiving position for delivery addresses, the delivery addresses including a delivery address of an item of a first user and a delivery address of an item of a second user; and a movement control unit that causes a delivery machine to move to the receiving position, the delivery machine being loaded with an item indicated by order information related to an order of the item. The determination unit is configured to: use the receiving position determining information to identify candidate positions; calculate, for each of the candidate positions, a distance between the candidate position and each of the delivery addresses; calculate, for each of the candidate positions, as a distance deviation of the candidate position, a difference between the distance to the delivery address closest to the candidate position and the distance to the delivery address farthest from the candidate position; and determine, as the common receiving position, the candidate position with the smallest distance deviation.

In this configuration, the common receiving position is determined for multiple delivery addresses so that users respectively receive items. This limits a decrease in the delivery efficiency. Further, this configuration reduces the imbalance in distance between the receiving position and each of the users prompted to receive the corresponding item, and ensures impartiality between the users moving to the receiving position.

In the delivery control system, the receiving position determining information may include information related to a permitted distance between each of the delivery addresses and the common receiving position, and the determination unit may determine, as the common receiving position, a position within the permitted distance from the delivery address.

This configuration allows a user to receive an item at the receiving position within the permitted distance.

The delivery control system may further include an obtaining unit that obtains, as the information related to the permitted distance, information indicating a distance specified by a user related to the order information.

This configuration allows the receiving position to be determined depending on the user's situation.

In the delivery control system, the receiving position determining information may include information related to a reference weight, and the determination unit may determine, as a receiving position to which the delivery machine is caused to move, the delivery address related to the item if the item has the reference weight or more.

This configuration reduces the burden on a user receiving an item having the reference weight or more.

In the delivery control system, the receiving position determining information may include information related to a reference volume, and the determination unit may determine, as a receiving position to which the delivery machine is caused to move, the delivery address related to the item if the item has the reference volume or more.

This configuration reduces the burden on a user receiving an item having the reference volume or more.

In the delivery control system, the receiving position determining information may include information related to a reference required time for movement from each of the delivery addresses to the common receiving position, and the determination unit may determine, as the common receiving position, a position of the delivery address where a required time for movement from the delivery address is within the reference required time.

This configuration reduces the burden on each user moving to the receiving position while reducing the time for the delivery machine to wait until the user receives the item.

In the delivery control system, the receiving position determining information may include information related to an evacuation place that is unaffected by weather, and the determination unit may obtain weather information related to an area of each of the delivery addresses and determine a position of the evacuation place as the common receiving position based on the weather information.

This configuration allows a user to receive an item in any weather.

In the delivery control system, the receiving position determining information may include information indicating a reference vertical difference, and the determination unit may identify a vertical difference from the receiving position to each of the delivery addresses and determine the delivery address as the common receiving position based on the identified vertical difference.

This configuration reduces the burden on a user receiving an item at the receiving position.

In the delivery control system, the receiving position determining information may include information related to an attribute of a user who ordered the item, and the determination unit may determine the delivery address of the user who ordered the item as a receiving position to which the delivery machine is caused to move based on the attribute.

This configuration reduces the burden on a user according to his attribute.

In the delivery control system, the determination unit may determine the common receiving position for two or more of the delivery addresses that are located in the permitted distance.

In this configuration, a group in which a common receiving position is set for multiple delivery addresses is identified according to a distance.

The delivery control system may further include a notification unit that notifies a user of arrival of the delivery machine after the delivery machine arrives at the common receiving position.

This configuration allows a user to recognize that the delivery machine has arrived and prompts the user to receive an item.

A delivery controller that achieves the above-described objective includes a determination unit that uses receiving position determining information to determine a common receiving position for delivery addresses, the delivery addresses including a delivery address of an item of a first user and a delivery address of an item of a second user and a movement instructing unit that instructs a delivery machine to move to the common receiving position, the delivery machine being loaded with an item indicated by order information related to an order of the item. The determination unit is configured to: use the receiving position determining information to identify candidate positions; calculate, for each of the candidate positions, a distance between the candidate position and each of the delivery addresses; calculate, for each of the candidate positions, as a distance deviation of the candidate position, a difference between the distance to the delivery address closest to the candidate position and the distance to the delivery address farthest from the candidate position; and determine, as the common receiving position, the candidate position with the smallest distance deviation.

A delivery control method that achieves the above-described objective includes using, by a computer, receiving position determining information to determine a common receiving position for delivery addresses, the delivery addresses including a delivery address of an item of a first user and a delivery address of an item of a second user and moving, by the computer, a delivery machine to the receiving position, the delivery machine being loaded with an item indicated by order information related to an order of the item. Using the receiving position determining information to determine the common receiving position comprises, by the computer: using the receiving position determining information to identify candidate positions; calculating, for each of the candidate positions, a distance between the candidate position and each of the delivery addresses; calculating, for each of the candidate positions, as a distance deviation of the candidate position, a difference between the distance to the delivery address closest to the candidate position and the distance to the delivery address farthest from the candidate position; and determining, as the common receiving position, the candidate position with the smallest distance deviation

### Advantageous Effects of Invention

In this configuration, the common receiving position is determined for multiple delivery addresses so that users respectively receives items. This limits a decrease in the delivery efficiency.

### BRIEF DESCRIPTION OF DRAWINGS

Fig. 1 is a diagram showing an example of the configuration of a delivery control system according to a first embodiment.
Fig. 2 is a diagram showing an example of the content of the customer information DB.
Fig. 3 is a diagram showing an example of a delivery sequence according to the first embodiment.
Fig. 4 is a flowchart showing an example of a process of the terminal device according to the first embodiment.
Fig. 5 is a flowchart showing an example of a process of the delivery machine according to the first embodiment.
Fig. 6 is a diagram illustrating the receiving position.
Fig. 7 is a diagram showing an example of the content of the evacuation place information.
Fig. 8 is a flowchart showing an example of a process of the terminal device according to a second embodiment.
Fig. 9 is a diagram illustrating the receiving position.
Fig. 10 is a diagram illustrating the distance deviation.
Fig. 11 is a flowchart showing an example of a process of the delivery machine according to a third embodiment.
Fig. 12 is a flowchart showing an example of a process of the delivery machine according to the third embodiment.
Fig. 13 is a diagram showing an example of the configuration of a delivery control system according to a fourth embodiment.
Fig. 14 is a diagram showing an example of a delivery sequence according to the fourth embodiment.

### DESCRIPTION OF EMBODIMENTS

A delivery control system, a delivery controller, and a delivery control method according to an embodiment will now be described with reference to the drawings.

### First Embodiment

### Entire Configuration

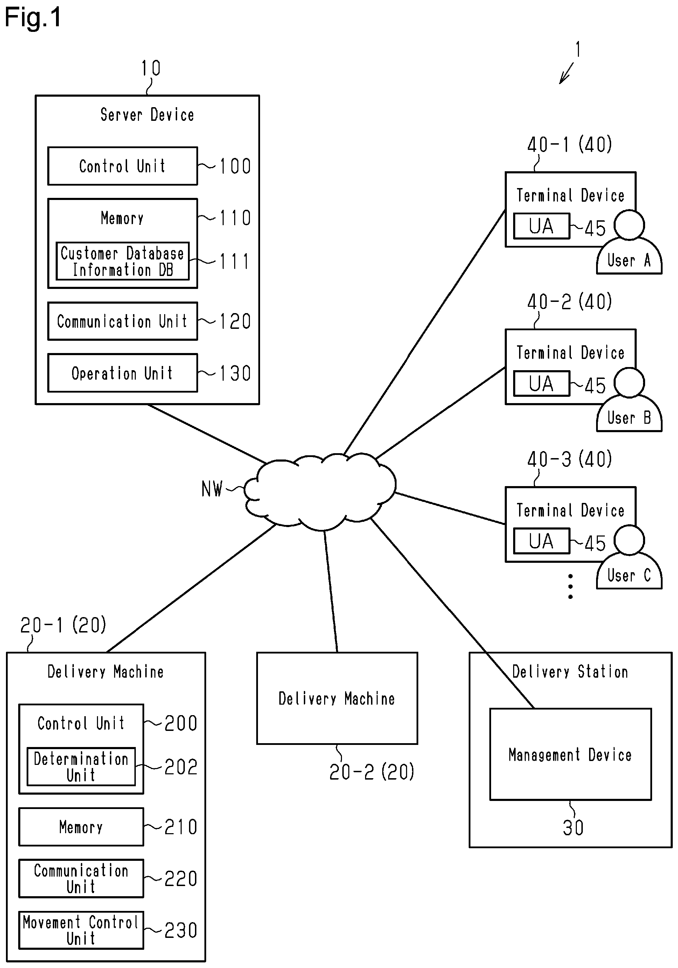

As shown in Fig. 1, a delivery control system 1 includes a server device 10, one or more delivery machines 20, one or more management devices 30, and one or more terminal devices 40. These devices of the delivery control system 1 communicate with one another via a network NW. Examples of the network NW include the Internet, a wide area network (WAN), a local area network (LAN), a provider terminal, a wireless communication network, a wireless base station, and a leased line. All the combinations of the devices shown in Fig. 1 do not necessarily have to communicate with one another. Part of the network NW may include a local network.

The server device 10 is, for example, a device that is accessed by the terminal devices 40 and mediates selling of items; namely, a device that provides a shopping site. The term "site" not only includes a website displayed by a browser but also includes the original data of an application screen displayed by an application program. In the following description, a person who purchases an item using a shopping site is referred to as a user.

Each delivery machine 20 delivers an item to a user. Each delivery machine 20 is, for example, an unmanned ground vehicle (UGV) that travels above the ground through automatic control. Fig. 1 illustrates that the delivery control system 1 includes two delivery machines 20; namely, delivery machines 20-1 and 20-2. The number of the delivery machines 20 included in the delivery control system 1 is merely exemplary and is not limited to two. Instead, the delivery control system 1 may include one delivery machine 20 or may include three or more delivery machines 20. In the following description, when the delivery machine 20-1 and the delivery machine 20-2 are not distinguished from each other, the term "delivery machine 20" is used.

Each management device 30 is disposed at a delivery station from which items are delivered. Examples of the delivery station include a warehouse that stores part of or all of the items sold on a shopping site. One or more delivery machines 20 are arranged for each management device 30. Based on information received from the server device 10 via the network NW, the management device 30 identifies items that are to be delivered in the same time period from the items stored in the warehouse. Workers in the delivery station collect the items identified by the management device 30 and loads the items with the delivery machine 20.

Each terminal device 40 is any type of information processing device including a client device (e.g., a smartphone, a desktop personal computer (PC), a notebook PC, or a tablet PC). Hereinafter, a shopping site has users A, B, and C who use terminal devices 40-1, 40-2, and 40-3, respectively. In the following description, when the terminal devices 40-1, 40-2, and 40-3 are not distinguished from one another, the term "terminal device 40" is used. In the terminal device 40, a user agent (UA) 45 such as a browser or an application starts. The UA 45 shows an item listing screen provided by the server device 10 and sends, to the server device 10, a request corresponding to an input operation performed by a user of the terminal device 40. In response to the request from the UA 45, the server device 10 determines the sale of an item.

### Server Device 10

The server device 10 includes, for example, a control unit 100, a memory 110, a communication unit 120, and an operation unit 130. The control unit 100 activates when, for example, a hardware processor such as a central processing unit (CPU) executes a program (software). Some of or all of these components may be activated by hardware (including circuitry) such as a large scale integration (LSI), an application specific integrated circuit (ASIC), a field-programmable gate array (FPGA), or a graphics processing unit (GPU) or may be activated through cooperation of software and hardware.

The memory 110 includes a non-transitory memory medium such as a random access memory (RAM), a hard disk drive (HDD), a flash memory, or a read-only memory (ROM). The memory 110 stores a customer information database (DB) 111 in addition to a program that activated the control unit 100.

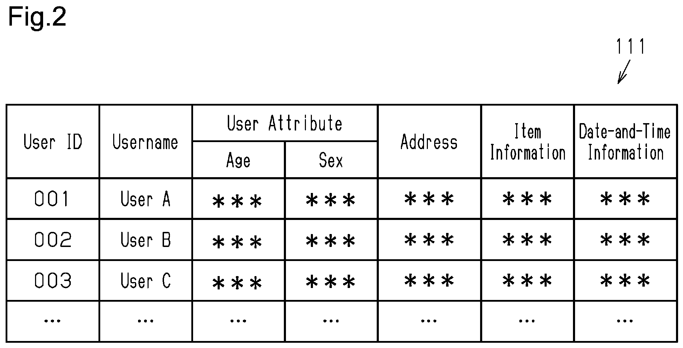

As shown in Fig. 2, the customer information DB 111 stores, for example, information that includes one or more records. In the records, a user ID that can be used to identify a user who uses a shopping site, information indicating a username, information indicating a user's attribute, information indicating a user's address, item information, and delivery date-and-time information are associated with one another. For example, the user ID is assigned to each user when the user creates an account for using a shopping site, and can be used to identify the user. The information indicating the user's attribute indicates, for example, the user's age or sex. The user's address is an example of the delivery address. Of the information included in the customer information DB 111, the information indicating the user ID, the username, the user's attribute, and the user's address is obtained at the time of creating an account for using a shopping site, and is stored in the customer information DB 111 in advance.

The control unit 100 communicates with the terminal device 40 via the network NW and executes the above-described processes for a shopping site. In response to the order by the user, the control unit 100 receives the item information, the delivery date-and-time information, and the user ID from the terminal device 40. The control unit 100 searches for the customer information DB 111 by using the received user ID as a search key, and identifies the record of the corresponding user. The control unit 100 associates the received item information and delivery date-and-time information with the identified record to generate or update the record of the customer information DB 111.

The control unit 100 sorts the customer information DB 111 using the delivery date-and-time information, and identifies the records in the same delivery time period. The control unit 100 divides the identified records in the same delivery time period into groups according to the address of an area to which an item is to be delivered from each delivery station. At a predetermined time before the delivery time period, the control unit 100 sends, as the order information, the record of each group to the management device 30 at the corresponding delivery station and the delivery machine 20 located at that delivery station.

The control unit 100 may send order information to a specific delivery machine 20 or may send order information to multiple delivery machines 20 in correspondence with the number of items capable of being delivered by each delivery machine 20. For example, the control unit 100 may send part of order information to the delivery machine 20-1 and send the remaining order information to the delivery machine 20-2.

Referring back to Fig. 1, the communication unit 120 communicates with the management device 30 and the terminal device 40 via the network NW so that the communication unit 120 sends and receives various types of information to and from the devices.

The operation unit 130 is, for example, an interface such as a display output device or an input device. The display output device displays an image that is based on control of the control unit 100 and provides a user of the server device 10 with various types of information. An operation by the user of the server device 10 is input to the input device so that the control unit 100 executes various processes based on that operation.

### Delivery Machine 20

The delivery machine 20 includes, for example, a control unit 200, a memory 210, a communication unit 220, and a movement control unit 230. The control unit 200 activates when, for example, a hardware processor such as a CPU executes a program (software). Some of or all of these components may be activated by hardware (including circuitry) such as a LSI, an ASIC, a FPGA, or a GPU or may be activated through cooperation of software and hardware.

The control unit 200 includes a determination unit 202. Using receiving position determining information, the determination unit 202 determines a common receiving position for the addresses of users that are based on the order information received from the server device 10. The receiving position is a position where each of the users receives an item that the user purchased in a shopping site. The receiving position determining information is used to determine the receiving position, and indicates a guideline for determining the receiving position. The receiving position determining information may be stored in the memory 210 or may be obtained by the determination unit 202 from the server device 10 when necessary.

In the present embodiment, the receiving position determining information includes information related to a permitted distance between the address of a user and the receiving position. In this case, the determination unit 202 determines, as the receiving position, a position in the permitted distance from the addresses of multiple users. A process executed by the determination unit 202 to determine the receiving position will be described later in detail.

The memory 210 includes a non-transitory memory medium such as a RAM, a HDD, a flash memory, or a ROM. The memory 210 stores, for example, a program that activates the control unit 200.

The communication unit 220 communicates with the server device 10 and the terminal device 40 via the network NW so that the communication unit 220 sends and receives various types of information to and from the devices.

The movement control unit 230 causes the delivery machine 20 loaded with an item to move to the receiving position. More specifically, the movement control unit 230 controls the speed and steering of the delivery machine 20 such that the delivery machine 20 moves to the receiving position determined by the determination unit 202. The movement control unit 230 controls various driving systems of the delivery machine 20 such that the delivery machine 20 passes along a target path to the address of a user or to the receiving position at an expected time. Examples of the various driving systems include a travel driving force (torque) output to driven wheels, a brake caliper, a cylinder that transmits hydraulic pressure to the brake caliper, an electric motor that generates hydraulic pressure to the cylinder, and an electric motor that changes the orientations of steered wheels. The processes of the movement control unit 230 are executed by combining, for example, feedforward control and feedback control. For example, the movement control unit 230 executes the processes by combining feedforward control corresponding to the curvature of a road in front of the delivery machine 20 with feedback control that is based on divergence from the target path.

### Delivery Control Sequence

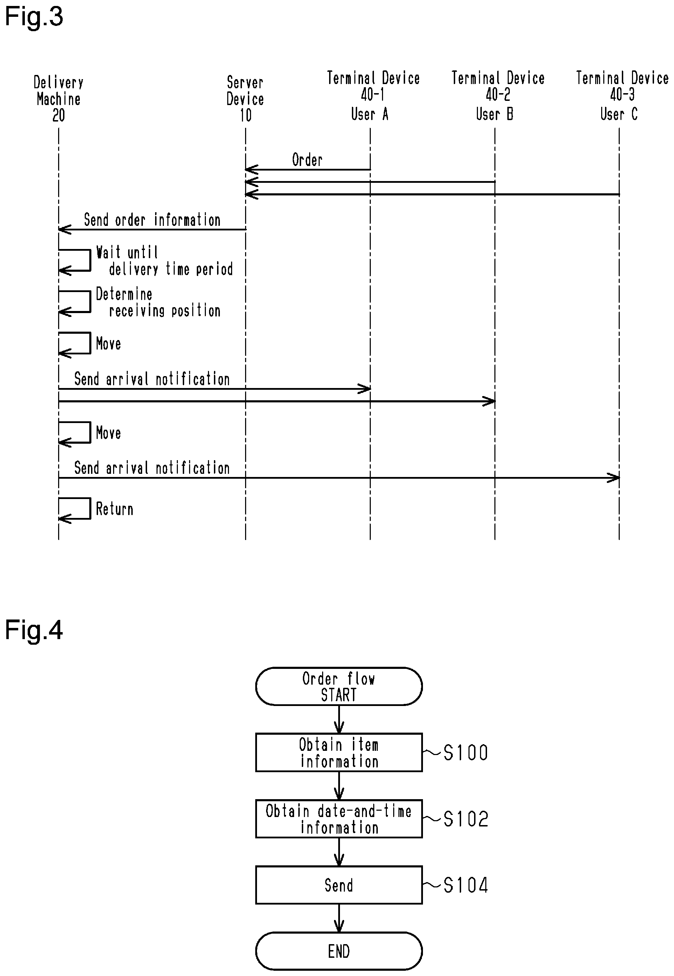

A series of events in the delivery of an item by the delivery control system 1 will now be described with reference to Fig. 3. First, a user accesses a shopping site using the terminal device 40 to order an item. Here, users A, B, and C respectively order items using the terminal devices 40-1 to 40-3 and request that the items be delivered at the same date and time.

After receiving the order from the terminal device 40, the server device 10 generates or updates the records of the customer information DB 111. Prior to the recent delivery time period by a predetermined time, the server device 10 sends the order information of each group to the management device 30 at the corresponding delivery station and the delivery machine 20 located at that delivery station.

After receiving the order information from the server device 10, the delivery machine 20 waits until the delivery time period. Then, the determination unit 202 of the delivery machine 20 executes a process that determines the receiving position (described later in detail) to determine the receiving position where users A and B will each receive the corresponding item. The delivery machine 20 moves to the determined receiving position and notifies the user who is to receive the item at the receiving position that the item has arrived at the receiving position. More specifically, after the delivery machine 20 arrives at the receiving position, the communication unit 220 issues a push notification to the terminal device 40 of the user to notify the user of the arrival. In this case, of users A, B, and C, the communication unit 220 notifies only users A and B of the arrival. In the process that issues a notification to the terminal device 40 of a user, the communication unit 220 is an example of a notification unit.

After users A and B respectively receive the items or after the waiting time elapses, the delivery machine 20 sets the receiving position to the address of the remaining user C and then moves to that address. The communication unit 220 notifies the terminal device 40 of user C that the delivery machine 20 has arrived at the address of user C. After user C receives the item or the waiting time elapses, the delivery machine 20 returns to the delivery station.

### Order Process of User

A process in which a user orders an item will now be described in detail with reference to Fig. 4. The process shown in Fig. 4 corresponds to the process of "Order" in the sequence shown in Fig. 3. As shown in Fig. 4, the server device 10 obtains item information indicating an item that is to be purchased by a user (step S100). More specifically, the control unit 100 causes the UA 45 to display an item listing screen that prompts the user to select an item, such that the user may select an item to be purchased. Next, the server device 10 obtains date-and-time information indicating the delivery date and time of the item at which the user requests that the item be delivered (step S102). More specifically, the control unit 100 causes the UA 45 to display a screen that provides candidates of the delivery date and time, such that the user may select the delivery date and time. The control unit 100 instructs the UA 45 to send the user ID, the item information obtained in step S100, and the delivery date-and-time information obtained in step S102 to the server device 10 (step S104). The user logs in the shopping site on the item listing screen so that the control unit 100 identifies the user ID of the user.

### Processes of Delivery Machine 20

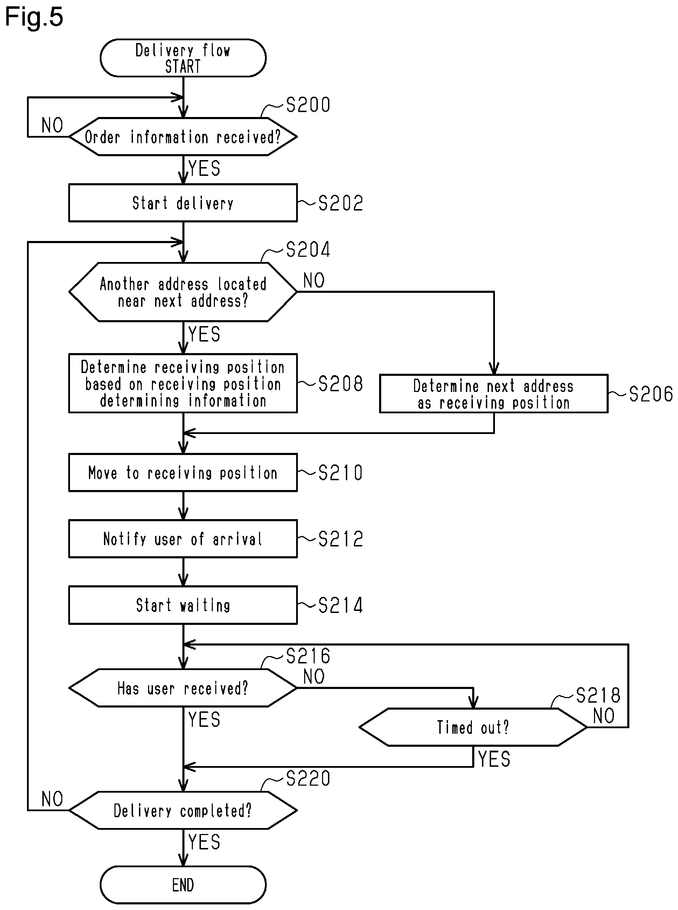

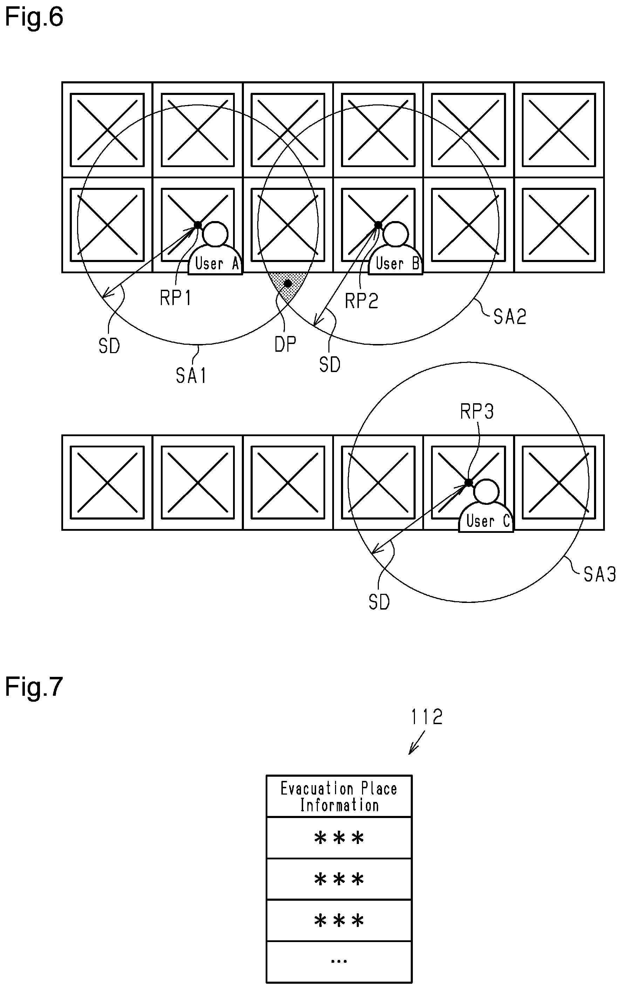

The processes of the delivery machine 20 will now be described in detail with reference to Figs. 5 and 6. The processes shown in Fig. 5 correspond to the processes of "Send order information", "Wait until delivery time period," "Determine receiving position," "Move," and "Send arrival notification" in the sequence shown in Fig. 3.

First, the delivery machine 20 receives order information from the server device 10 (step S200). In this case, the delivery machine 20 records the received order information in the memory 210. Before the delivery time period begins, a worker in the delivery station loads the delivery machine 20 with the items identified by the management device 30. Next, when the delivery time period begins, the delivery machine 20 starts delivering the items (step S202). For example, of the addresses shown in the order information, the delivery machine 20 sequentially starts delivering the items to addresses closer to the delivery station. The determination unit 202 determines whether the address of another user is located near the address of the user to which the next item will be delivered (step S204). For example, when the received order information includes order information indicating the address of a user in the same area as that of the address of the user to which the next item will be delivered, the determination unit 202 determines that the address of another user is located near the address of the user to which the next item will be delivered. The address of the user to which the next item will be delivered is an example of "a delivery address of an item of a first user." The address of another user that is located near the address of the user to which the next item will be delivered is an example of "a delivery address of an item of a second user."

When determining that the address of another user is not located near the address of the user to which the next item will be delivered, the determination unit 202 determines, as the receiving position, the address of the user to which the next item will be delivered (step S206). When determining that the address of another user is located near the address of the user to which the next item will be delivered, the determination unit 202 determines the receiving position based on the receiving position determining information (step S208).

The process that determines the receiving position will now be described in detail with reference to Fig. 6. Here, the delivery machine 20 sequentially delivers items to users A, B, and C. The determination unit 202 determines that an address RP2 of user B and an address RP3 of user C are each located, as another address RP, near another address RP1 of user A.

As described above, the receiving position determining information of the permitted distance includes information related to a permitted distance SD between each address RP and a receiving position DP. The permitted distance SD is a distance to which a user can generally move to take an item. More specifically, the permitted distance SD is approximately several to several tens of meters. For example, the determination unit 202 uses map information to identify an overlapping range between a predetermined range SA1, in which the distance from the address RP1 is less than or equal to the permitted distance SD, a predetermined range SA2, in which the distance from the address RP2 is less than or equal to the permitted distance SD, and a predetermined range SA3, in which the distance from the address RP3 is less than or equal to the permitted distance SD. In this case, the determination unit 202 may obtain map information including the addresses RP1 to RP3 from the server device 10 or from another service that provides the map information. Alternatively, the determination unit 202 may use map information that is stored in the memory 210 in advance and includes at least an area to which the delivery machine 20 delivers an item.

In the example shown in Fig. 6, part of the predetermined range SA1 overlaps part of the predetermined range SA2. The determination unit 202 determines, as the receiving position DP, a position in the range where the predetermined range SA1 overlaps the predetermined range SA2. That is, the determination unit 202 determines, as the receiving position DP, a position in the permitted distance SD from each of the addresses RP1 and RP2.

The predetermined range SA3 does not overlap any other predetermined range SA. Thus, the determination unit 202 excludes user C from receiving an item at the receiving position DP in the range where the predetermined range SA1 overlaps the predetermined range SA2.

Referring back to Fig. 5, the delivery machine 20 moves to the receiving position DP that has been determined by the determination unit 202 (step S210). The communication unit 220 notifies the terminal device 40 of the user who is to receive the item at the receiving position DP that the delivery machine 20 has arrived at the receiving position DP (step S212). In the example of Fig. 6, the communication unit 220 notifies the terminal device 40-1 of user A and the terminal device 40-2 of user B that the delivery machine 20 has arrived at the receiving position DP. Then, the delivery machine 20 starts waiting at the receiving position DP (step S214).

In response to the notification in step S212, the user moves to the receiving position DP to receive the item that he ordered from the items with which the delivery machine 20 is loaded. The user notifies the delivery machine 20 that he has received the item, by operating the UA 45 of the terminal device 40 or by operating an operated part (not shown) of the delivery machine 20.

The delivery machine 20 determines whether the user who received an arrival notification in step S212 has received the item (step S216). When determining that the user has not received the item, the delivery machine 20 determines whether a predetermined waiting time has elapsed since the delivery machine 20 started waiting at the receiving position DP in step S214 (step S218). More specifically, the waiting time is a time that does not hinder the delivery of an item to another user. The waiting time is, for example, several to several tens of minutes. When determining that the predetermined waiting time has not elapsed since the delivery machine 20 started waiting, the delivery machine 20 returns to the process of step S216.

When determining that the user has received the item, or when determining that the predetermined waiting time has elapsed since the delivery machine 20 started waiting and the waiting process times out, the delivery machine 20 determines whether the delivery related to the order information received in step S200 is completed (step S220). When determining that the delivery is not completed, the determination unit 202 returns to step S204.

### Process that Determines Receiving Position DP Based on Required Time

In the above-described explanation, the determination unit 202 determines the receiving position DP based on the permitted distance SD from each address RP. Instead, the determination unit 202 may determine the receiving position DP based on, for example, a required time for movement from each address RP. In this case, the receiving position determining information includes information related to a reference required time. The reference required time is generally, for example, the permissible time for a user to move from his address RP to the receiving position DP in order to take an item. More specifically, the reference required time is several to several tens of minutes.

The determination unit 202 uses map information to identify a range in which the required time for movement from each address RP is within a permitted time (reference predetermined time), based on, for example, a time generally required for movement from the address RP of a specific user to the address RP of another user that is located near the specific user or a time generally required for passage at an intersection, a railroad crossing, or the like with traffic lights. The determination unit 202 determines, as the receiving position DP, a position in a range where the identified range is overlapped. That is, the determination unit 202 determines, as the receiving position DP, a position where the required time for movement from the address RP is within the reference predetermined time.

Alternatively, the determination unit 202 may identify a range in which the required time is within a predetermined time by taking a time for movement between floors into account. In this case, based on the address RP of the user included in the order information, the determination unit 202 identifies on which floor of the building the user resides. Then, based on a time generally required for movement using, for example, an elevator or a stairway, the determination unit 202 identifies the range in which the required time for movement from the address RP is within the reference predetermined time. For example, when the determination unit 202 identifies, as a range of the upper two and lower two floors, a range in which the required time from the fourth floor of a building is within the reference predetermined time and determines the fourth floor as the receiving position DP, the communication unit 220 notifies other users whose addresses RP are located on the second to sixth floors in the same building that the delivery machine 20 has arrived at the receiving position DP on the fourth floor.

### Process that Determines Receiving Position DP Based on Vertical Difference

The determination unit 202 may determine the receiving position DP based on, for example, the vertical difference between each address RP and the receiving position DP. In this case, the receiving position determining information includes information related to a reference vertical difference. The reference vertical difference is, for example, the distance in the vertical direction by which a user can generally move to take an item, and indicates the upper limit of the distance in the vertical direction. For example, the reference vertical difference has a value of several percent. When the reference vertical difference is 1 %, a 10 cm rise for 10 m movement indicates the upper limit of the distance in the vertical direction.

The determination unit 202 obtains map information indicating a vertical difference. Next, the determination unit 202 identifies a range in which the vertical difference produced by the movement from a specific address RP to the address RP of another user that is located near the specific address RP is within the reference vertical difference. The determination unit 202 determines, as the receiving position DP, a position in a range where the identified range is overlapped. That is, the determination unit 202 determines, as the address RP, a position where the vertical difference from the address RP is within the reference vertical difference.

The reference vertical difference may indicate the lower limit of the distance of a vertical difference. When the vertical difference from an address RP to the receiving position DP has a negative value, it indicates that the movement path from the address RP to the receiving position DP is downhill. In this case, after receiving an item at the receiving position DP, the user is required to climb uphill and move to the address RP. Climbing uphill after receiving the item is burdensome for the user. In contrast, when the reference vertical difference has a lower limit of 0 or greater and an upper limit of several percent, the determination unit 202 determines the receiving position DP in a range in which the range of the vertical difference is within the range of the reference vertical difference. Thus, the determination unit 202 reduces the burden on the user's movement.

Alternatively, the determination unit 202 may identify a range within the reference vertical difference by taking the vertical difference between floors into account. In this case, the reference vertical difference is, for example, a distance in the vertical direction by which a user can generally move to take an item, and is a distance corresponding to approximately several floors. More specifically, the reference vertical difference is approximately several meters. In this case, based on the address of the user included in the order information, the determination unit 202 identifies on which floor of the building the user resides. Then, the determination unit 202 identifies a range in which the vertical difference from the address RP is within the reference vertical difference. For example, when the determination unit 202 identifies, as a range of the upper two and lower two floors, a range within the reference vertical difference from the fourth floor of the building and determines the fourth floor as the receiving position DP, the communication unit 220 notifies other users whose addresses RP are located on the second to sixth floors in the same building that the delivery machine 20 has arrived at the receiving position DP on the fourth floor.

### Process that Determines Receiving Position DP Based on Weather

The determination unit 202 may determine the receiving position DP based on, for example, weather information related to the area of each address RP. In this case, the receiving position determining information includes evacuation place information 112. The evacuation place information 112 indicates, for example, the position of an evacuation place that is unaffected by weather. The evacuation place unaffected by weather is, for example, a place that is unaffected by rain or snow or is less likely to be affected by rain or snow in the case of raining or snowing in the area of the place. More specifically, the evacuation place may be an outdoor place with eaves, an indoor place, or a place where the delivery machine 20 is permitted in advance to wait for receiving an item.

As shown in Fig. 7, the evacuation place information 112 includes one or more types of information indicating where the evacuation place is located. The evacuation place information 112 may be stored in the memory 210 of the delivery machine 20 in advance, or may be obtained by the delivery machine 20 from the server device 10 when necessary.

The determination unit 202 obtains the weather information of the area of the address RP to which the delivery machine 20 is moving, and determines whether it is raining or snowing in that area. When determining that it is raining or snowing, the determination unit 202 uses the evacuation place information 112 to determine, as the receiving position DP, the position of an evacuation place that is located in the vicinity of the address RP to which the delivery machine 20 is moving.

### Summary of First Embodiment

As described above in detail, the first embodiment provides the following advantages.

(1-1) The delivery control system 1 of the present embodiment prompts a user who is to receive an item at the receiving position DP to receive the item at the receiving position DP. Thus, the delivery control system 1 limits a decrease in the delivery efficiency as compared with the case of respectively delivering items to addresses RP that are close to one another. Further, the delivery control system 1 allows a user to receive an item at the receiving position DP without waiting for the delivery machine 20 in the vicinity of the user to arrive at his own address RP. Thus, the delivery control system 1 shortens the time for the user to wait until the item is delivered.

(1-2) In the present embodiment, the determination unit 202 determines, as the receiving position DP, a position in the permitted distance SD from each address RP. As described above, the permitted distance SD is a distance to which a user can generally move to take an item. This allows the determination unit 202 to determine, as the receiving position DP, a position to which a user can generally move to take an item. This reduces the burden on the movement of the user to take the item.

(1-3) Users corresponding to the addresses RP in which the required time for movement from each address RP to the receiving position DP is within the reference required time are prompted by the delivery control system 1 of the present embodiment to respectively receive the items at the common receiving position DP. This reduces the burden on each user moving to the receiving position DP while reducing the time for the delivery machine 20 to wait until the user receives the item.

(1-4) Users corresponding to multiple addresses RP in which the vertical difference between each address RP and the receiving position DP is within the reference vertical difference are prompted by the delivery control system 1 of the present embodiment to respectively receive the items at the receiving position DP. This allows the delivery control system 1 to reduce the burden on the user moving to take the item while reducing a decrease in the delivery efficiency.

(1-5) The determination unit 202 of the present embodiment obtains the weather information of an area of the address RP to which the delivery machine 20 is moving, and determines whether it is raining or snowing in that area. When determining that it is raining or snowing, the determination unit 202 refers to the evacuation place information 112 to determine, as the receiving position DP, the position of an evacuation place in the vicinity of the address RP to which the delivery machine 20 is moving. Thus, the delivery control system 1 allows the users to respectively receive the items at the receiving position DP in any weather.

(1-6) When the delivery machine 20 arrives at the receiving position DP, the communication unit 220 of the present embodiment notifies users of the arrival of the delivery machine 20. Thus, the delivery control system 1 allows the users to recognize that the delivery machine 20 has arrived, and prompts the users to respectively receive the items.

### Second Embodiment

The delivery control system 1 according to a second embodiment will now be described. In the first embodiment, the determination unit 202 determines the receiving position DP based on, for example, a preset permitted distance SD. In the second embodiment, the determination unit 202 may determine the receiving position DP based on a condition desired by the user. The components of the second embodiment that are the same as those of the first embodiment are given the same reference numerals. Such components will not be described.

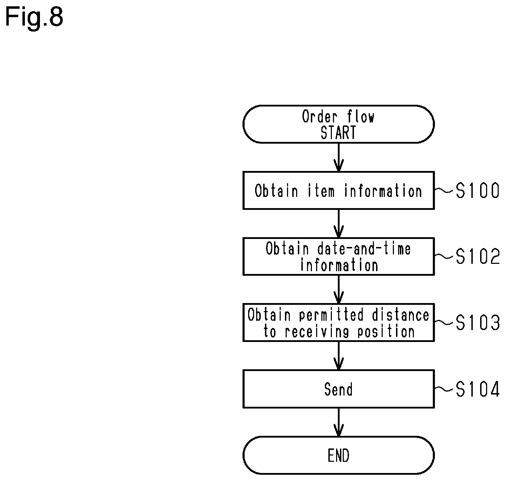

As shown in Fig. 8, the UA 45 of the present embodiment executes the process of step S103 between the processes of steps S102 and S104 in the flowchart illustrated in Fig. 2. More specifically, the server device 10 obtains the permitted distance SD to the receiving position DP that is desired by the user (step S103). For example, the control unit 100 causes the UA 45 to display an item listing screen, which prompts the user to input the permitted distance SD, such that the user may input the permitted distance SD. Thus, the permitted distance SD of the present embodiment is a distance desired by the user, and permits the user to move to take an item.

In step S104, the control unit 100 of the present embodiment instructs the UA 45 to send information indicating the item information, delivery date-and-time information, user ID, and permitted distance SD to the server device 10. Based on the received order information, the control unit 100 updates the customer information DB 111. In this case, the customer information DB 111 stores information that includes one or more records in which the user ID, information indicating a username, information indicating a user's attribute, information indicating a user's address, item information, delivery date-and-time information, and information indicating the permitted distance SD are associated with one another. In the process that obtains the permitted distance SD from the user, the control unit 100 is an example of an obtaining unit.

The process of the determination unit 202 according to the second embodiment will now be described in detail.

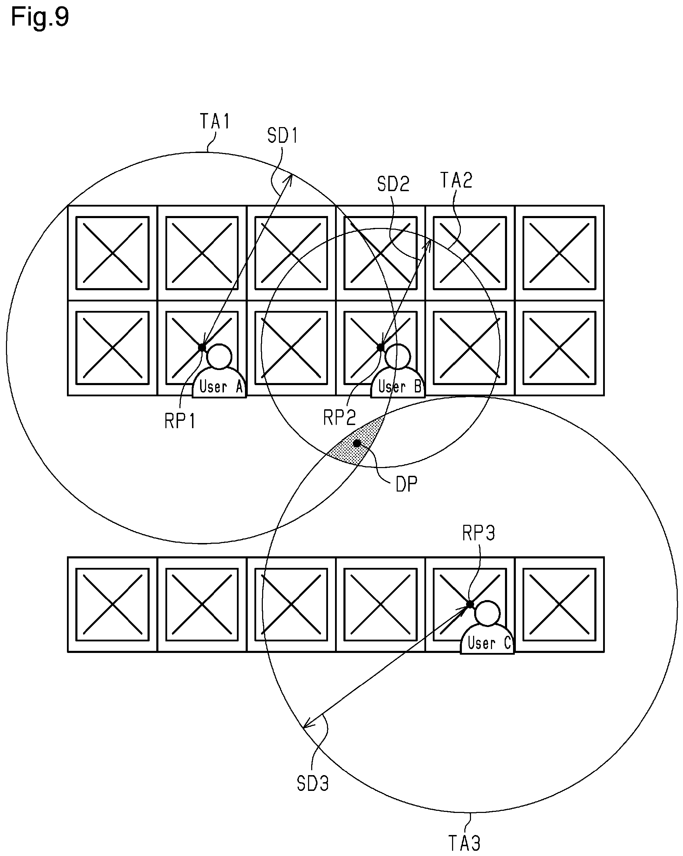

In the situation shown in Fig. 9, the delivery machine 20 determines to deliver items in the order of users A, B, and C and the determination unit 202 determines that the address RP2 of user B and the address RP3 of user C are each located, as another address RP of a user, near another address RP1 of user A.

For example, the determination unit 202 of the present embodiment uses map information to identify an overlapping range between a permitted range TA1 in which the distance from the address RP1 is less than or equal to a permitted distance SD1 of user A, a permitted range TA2 in which the distance from the address RP2 is less than or equal to a permitted distance SD2 of user B, and a permitted range TA3 in which the distance from the address RP3 is less than or equal to a permitted distance SD3 of user C. In the example shown in Fig. 9, part of the permitted range TA1, part of the permitted range TA2, and part of permitted range TA3 overlap one another. The determination unit 202 determines, as the receiving position DP, a position in the overlapping range of the permitted ranges TA1, TA2, and TA3. That is, the determination unit 202 determines, as the receiving position DP, a position within each of the permitted distances SD1 to SD3, which are respectively desired by the users, from the corresponding one of the addresses RP1 to RP3.

### Summary of Second Embodiment

The second embodiment has the following advantage.

(2-1) The determination unit 202 of the delivery control system 1 in the present embodiment determines, as the receiving position DP, a position in the permitted distance SD desired by a user from his address RP. This allows the delivery control system 1 to determine the receiving position DP depending on the user's situation.

### Modification

A modification of the above-described embodiments will now be described. In this modification, the determination unit 202 determines the receiving position DP when there are multiple candidate positions of the receiving position DP. The components of the modification that are the same as those of the above-described embodiments are given the same reference numerals. Such components will not be described.

The candidate position of the receiving position DP is hereinafter referred to as the candidate position SDP. By executing the above-described process, the determination unit 202 may use the receiving position determining information to identify multiple candidate positions SDP. More specifically, for example, the overlapping range of the predetermined ranges SA may be broad, the overlapping range of the permitted range TA may be broad, or multiple evacuation places may be located in the vicinity of the addresses RP. In this case, the determination unit 202 identifies, as the candidate positions SDP, positions in the overlapping range or evacuation places. The determination unit 202 determines, as the receiving position DP, a candidate position SDP where a distance deviation between each of the candidate positions SDP and the address RP is small.

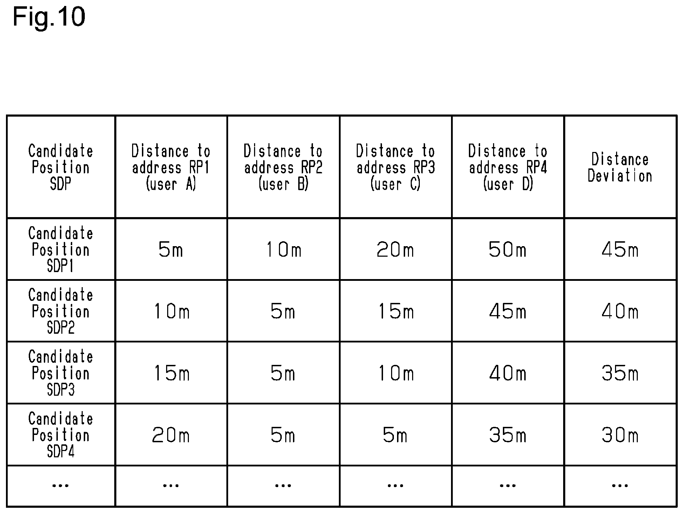

In the example shown in Fig. 10, the determination unit 202 identifies four candidate positions SDP, namely, candidate positions SDP1 to SDP4, as candidates for the receiving position DP of each of the users A to D. The determination unit 202 calculates the distance between each candidate position SDP and the address RP of the corresponding user. Of the calculated distances, the determination unit 202 calculates, as the distance deviation, the difference between the distance to the address RP closest to the candidate position SDP and the distance to the candidate position SDP farthest from the address RP. In the example shown in Fig. 10, the determination unit 202 identifies the address RP closest to the candidate position SDP1 as the address RP1 of user A, and identifies the address RP farthest from the candidate position SDP1 as the address RP4 of user D. The determination unit 202 calculates the distance deviation of the candidate position SDP1 as 45 m, which is the difference between 50 m and 5 m. The determination unit 202 executes the same process for the candidate positions SDP2 to SDP4 and calculates the distance deviations of the candidate positions SDP2 to SDP4 as 40 m, 35 m, and 30 m, respectively. The determination unit 202 determines, as the receiving position DP, the candidate position SDP4 with the smallest distance deviation.

### Summary of Modification

As described above, the determination unit 202 according to the modification uses the receiving position determining information to identify multiple candidate positions SDP and determine, as the receiving position DP, the candidate position SDP having the smallest distance deviation from multiple addresses RP. Thus, the delivery control system 1 reduces the imbalance in distance between the receiving position DP and each of the users prompted to receive the corresponding item, and ensure impartiality between the users moving to the receiving position DP.

### Third Embodiment

The delivery control system 1 according to a third embodiment will now be described. In the third embodiment, the determination unit 202 determines an address RP as the receiving position DP. The components of the third embodiment that are the same as those of the above-described embodiments and the modification are given the same reference numerals. Such components will not be described.

The determination unit 202 of the present embodiment uses excluding conditions. The excluding conditions are included in the receiving position determining information to determine whether a user is subject to exclusion. When determining that the user is subject to exclusion, the determination unit 202 excludes the determined user from receiving an item together with multiple users at the receiving position DP and determines, as the receiving position DP, the address RP of the determined user.

In the present embodiment, the receiving position determining information includes, as information indicating the excluding conditions, information related to a reference weight, information related to a reference volume, and information related to a user's attribute.

When determining that the item ordered by a user has a weight greater than or equal to the reference weight based on the receiving position determining information, the determination unit 202 determines the address RP of that user as the receiving position DP.

For example, the memory 110 of the server device 10 or a memory of another server device accessible by the server device 10 stores an item information database (DB). The item information DB indicates, for an item identifier, information of an item that is sold in a shopping site. The information of an item includes the weight and volume of that item. For an item in the order information, the determination unit 202 refers to the item information DB to identify the weight of the item ordered by a user. When determining that the weight of the identified item is greater than or equal to the reference weight, the determination unit 202 regards that user as being subject to exclusion and determines the address RP of that user as the receiving position DP.

When determining that the item ordered by a user has a volume greater than or equal to the reference volume based on the receiving position determining information, the determination unit 202 determines the address RP of that user as the receiving position DP. More specifically, for an item in the order information, the determination unit 202 refers to the item information DB to identify the volume of an item ordered by a user. When determining that the volume of the identified item is greater than or equal to the reference volume, the determination unit 202 regards that user as being subject to exclusion and determines the address RP of that user as the receiving position DP.

The delivery machine 20 may obtain information indicating the weight of an item ordered by a user and information indicating the volume of that item from the management device 30 or from an input or the like to the delivery machine 20 of a worker at a delivery station.

In a case one user has purchased multiple items, the determination unit 202 may identify, as the weights of the items, the total weights of the items or the weight of a storage box that accommodates the items. Alternatively, in a case one user has purchased multiple items, the determination unit 202 may identify, as the volumes of the items, the total volumes of the items or the volume of a storage box that accommodates the items.

Based on the receiving position determining information, the determination unit 202 may determine whether a user is subject to exclusion according to the user's attribute. Examples of the attribute used to determine that the user is subject to exclusion include an attribute indicating that the user has difficulty moving to the receiving position DP to take an item (hereinafter referred to as the exclusion subject attribute). Specifically, the exclusion subject attribute is an attribute indicating that the age of a user is greater than or equal to a predetermined age and the like. More specifically, the determination unit 202 obtains attribute information from the server device 10 about a user indicated in the order information stored in the memory 210. When the user attribute indicates the exclusion subject attribute, the determination unit 202 determines the address RP of that user as the receiving position DP.

The above-described information indicating the user's attribute is merely exemplary. Instead, for example, the exclusion subject attribute may include whether the user lives with a family, whether the user is at home during the daytime, and whether the user has difficulty walking. These exclusion subject attributes are, for example, obtained when the user creates an account for using a shopping site and stored in the customer information DB 111 in advance. For example, the determination unit 202 may assume that the user attribute of a user who does not live with a family is the exclusion subject attribute and determine the address RP of that user as the receiving position DP. Further, the determination unit 202 may assume that the user attribute of a user who is not at home during the daytime is the exclusion subject attribute and determine the address RP of that user as the receiving position DP. Furthermore, the determination unit 202 may assume that the user attribute of a user who has difficulty walking is the exclusion subject attribute and determine the address RP of that user as the receiving position DP.

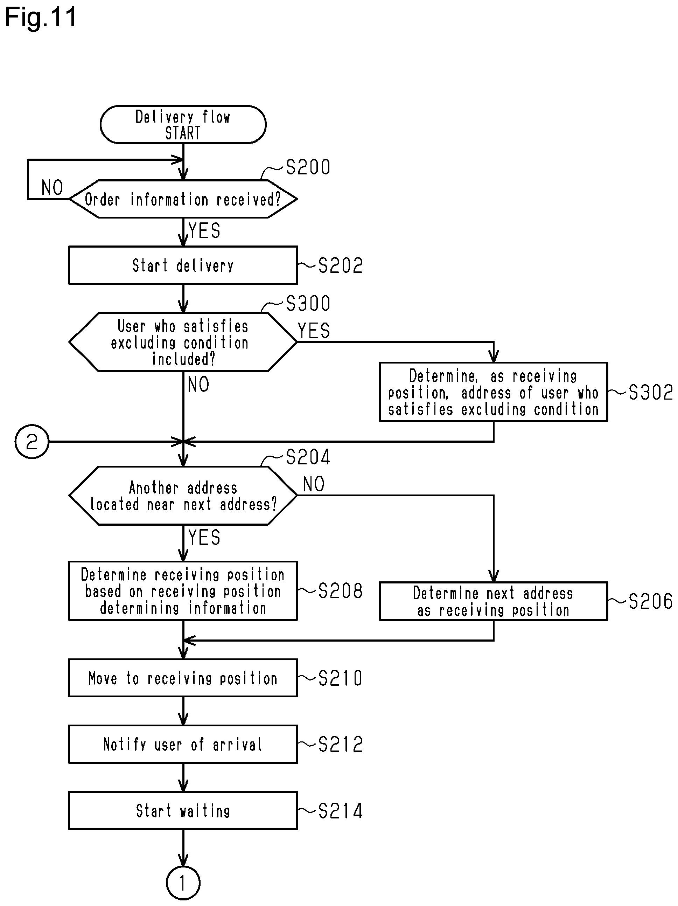

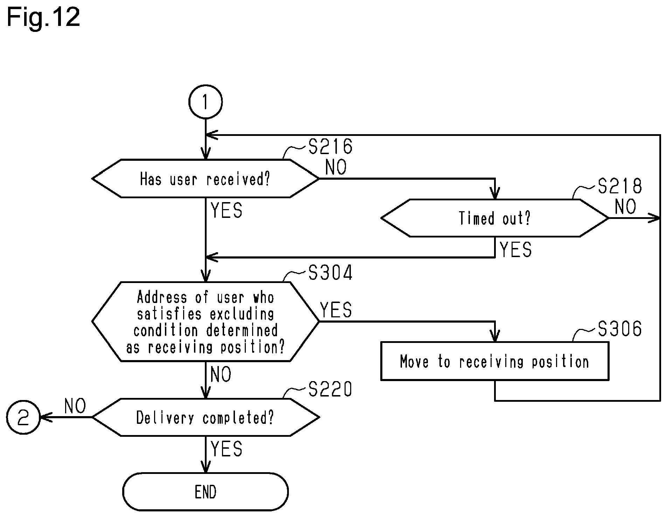

As shown in Fig. 11, the delivery machine 20 of the present embodiment executes the processes of steps S300 and S302 between steps S202 and S204 in the flowchart illustrated in Fig. 5. As shown in Fig. 12, the delivery machine 20 of the present embodiment executes the processes of steps S304 and S306 between step S216 or step S218 and step S220 in the flowchart illustrated in Fig. 5.

More specifically, after the delivery machine 20 starts delivering items to users in step S202, the determination unit 202 uses the receiving position determining information to determine whether the users in the order information received in step S200 include a user whose user attribute is the exclusion subject attribute (step S300). When determining that a user whose user attribute is the exclusion subject attribute is included, the determination unit 202 determines the address RP of that user as the receiving position DP (step S302) and returns to step S204. When determining that a user whose user attribute is the exclusion subject attribute is not included, the determination unit 202 returns to step S204.

When determining in step S216 that the user has received the item or when determining in step S218 that the waiting time has elapsed since the delivery machine 20 started waiting and the waiting process times out, the determination unit 202 returns to step S304. In step S302, the determination unit 202 determines whether the address RP of a user having the exclusion subject attribute has been determined as the receiving position DP (step S304). When the determination unit 202 determines that the address RP of a user whose user attribute is the exclusion subject attribute has been determined as the receiving position DP, the delivery machine 20 moves to the receiving position DP (step S306) and the determination unit 202 returns to step S216. When the determination unit 202 determines that the address RP of a user whose user attribute is the exclusion subject attribute has not been determined as the receiving position DP, the determination unit 202 returns to step S220. Thus, a user whose user attribute is the exclusion subject attribute receives an item at his own address RP, instead of receiving the item at the receiving position DP together with other users who are located in the vicinity of that address RP.

The third embodiment has the following advantages.

(3-1) In the delivery control system 1 of the present embodiment, the receiving position determining information includes information related to the reference weight. In this case, the determination unit 202 determines, as the receiving position DP, the address RP of a user related to an item having the reference weight or more. Thus, the delivery control system 1 reduces the burden on a user receiving an item having the reference weight or more.

(3-2) In the delivery control system 1 of the present embodiment, the receiving position determining information includes information related to the reference volume. In this case, the determination unit 202 determines, as the receiving position DP, the address RP of a user related to an item having the reference volume or more. Thus, the delivery control system 1 reduces the burden on a user receiving an item having the reference volume or more.

(3-3) In the delivery control system 1 of the present embodiment, the information related to a user's attribute who ordered an item is included in the receiving position determining information. In this case, the determination unit 202 may determine, as the receiving position DP, the address RP of the user according to the user's attribute. This allows the delivery control system 1 to determine the receiving position DP according to the attribute, thereby reducing the burden on the user.

### Fourth Embodiment

A delivery control system 2 according to a fourth embodiment will now be described. In the above-described embodiments and the modification, the delivery machine 20 determines the receiving position DP. In the present embodiment, another device determines the receiving position DP. The components of the fourth embodiment that are the same as those of the above-described embodiments and the modification are given the same reference numerals. Such components will not be described.

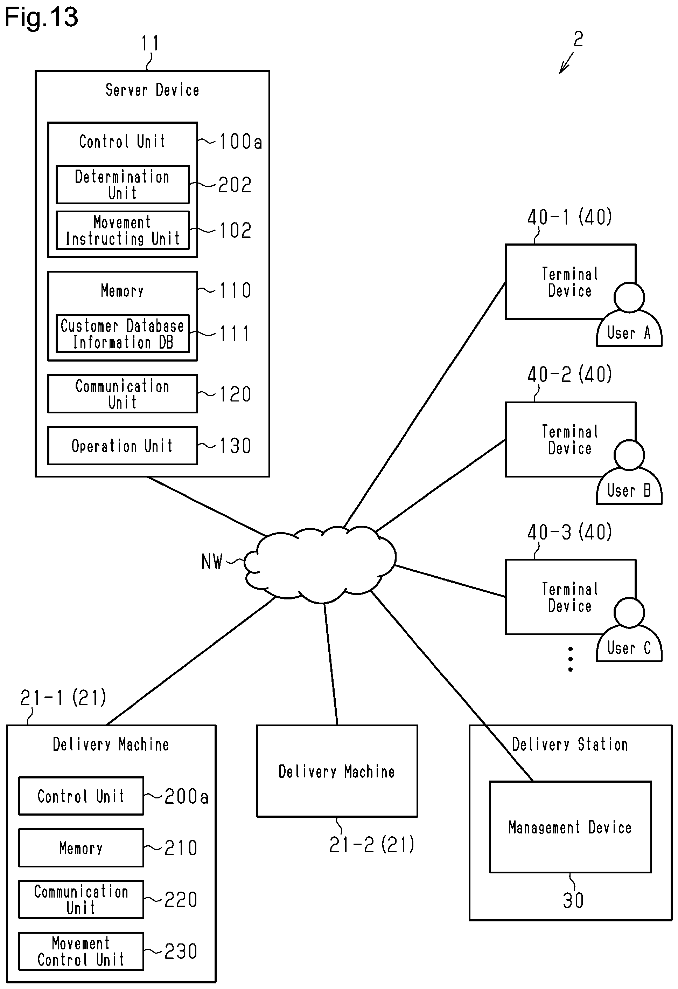

As shown in Fig. 13, instead of the server device 10, the delivery control system 2 includes a server device 11 with the determination unit 202 that determines the receiving position DP. Instead of the delivery machine 20, a delivery machine 21 of the delivery control system 2 may include a control unit 200a that does not determine the receiving position DP.

The server device 11 includes a control unit 100a, instead of the control unit 100 of the server device 10. The control unit 100a activates when, for example, a hardware processor such as a central processing unit (CPU) executes a program (software). Some of or all of these components may be provided by hardware (including circuitry) such as a LSI, an ASIC, a FPGA, or a GPU or may be provided through cooperation of software and hardware.

The control unit 100a includes the determination unit 202 and a movement instructing unit 102. The determination unit 202 of the present embodiment executes a process that determines the receiving position DP for order information that has been divided into groups according to the address of an area to which an item is delivered from each delivery station. The process that determines the receiving position DP by the determination unit 202 is the same as the above-described process, and thus will not be described.

The movement instructing unit 102 instructs the delivery machine 21 to move to the receiving position DP that has been determined by the determination unit 202. More specifically, the movement instructing unit 102 instructs the delivery machine 21 to move by causing the communication unit 120 to send, to the delivery machine 21, information indicating the determined receiving position DP.

In the present embodiment, the delivery machine 21 moves to the receiving position DP and delivers an item to a user, based on the information indicating the receiving position DP received from the server device 11.

The movement instructing unit 102 may instruct the delivery machine 21 to move to one receiving position DP by sending information indicating that receiving position DP to the delivery machine 21. In this case, after the delivery machine 21 arrives at that receiving position DP, the movement instructing unit 102 instructs the delivery machine 21 to move to the next receiving position DP. Alternatively, the movement instructing unit 102 may instruct the delivery machine 21 to move to a series of receiving positions DP in the area where grouping was performed, by sending, to the delivery machine 21, the information indicating the receiving position DP as travel route information indicating a route in which the delivery machine 21 is traveling to the series of receiving positions DP.

### Delivery Control Sequence

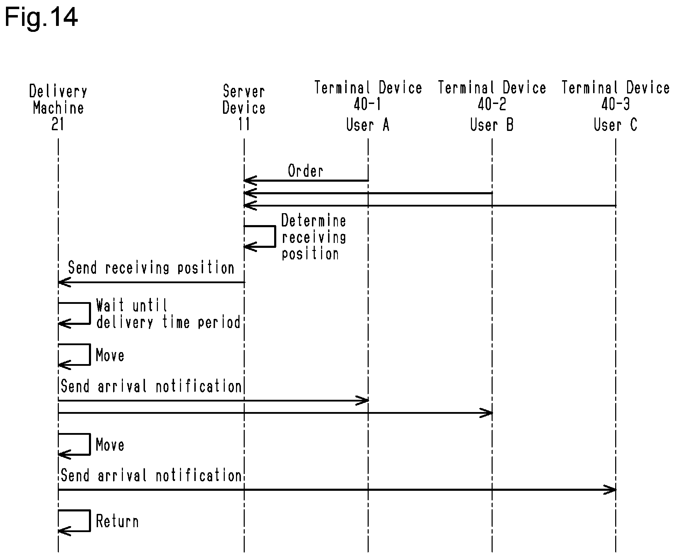

A series of events in the delivery of an item by the delivery control system 2 will now be described with reference to Fig. 14. As shown in Fig. 13, after receiving orders from the terminal devices 40, the server device 11 generates or updates the records of the customer information DB 111. A predetermined time before the delivery time period, the server device 11 uses the order information of groups to execute a process that determines the receiving position DP for each group. The server device 11 sends information indicating the determined receiving position DP to the delivery machine 21 that is located in the corresponding delivery station.

After receiving the receiving position DP from the server device 11, the delivery machine 21 waits until the delivery time period. Then, the delivery machine 21 moves to the determined receiving position DP and notifies the user who is to receive the item at the receiving position DP that the item has arrived at the receiving position. After users A and B respectively receive the items or the waiting time elapses, the delivery machine 21 sets the receiving position DP to the address RP of the remaining user C and moves to that address RP. The delivery machine 21 notifies user C that the delivery machine 21 has arrived at the address RP of user C. After user C receives the item or the waiting time elapses, the delivery machine 21 returns to the delivery station.

The fourth embodiment has the following advantages.

(4-1) In the delivery control system 2 of the present embodiment, the server device 11 determines the receiving position DP, and the delivery machine 21 moves to the receiving position DP determined by the server device 11. This allows the delivery control system 2 to provide the same advantages as the delivery control system 1.

### Combination of Processes that Determine Receiving Position DP

In the above-described embodiments and the modification, the determination unit 202 determines the receiving position DP based on various types of information included in the receiving position determining information. Instead, for example, the determination unit 202 may determine the receiving position DP based on one of the various types of information included in the receiving position determining information or may determine the receiving position DP based on a combination of the various types of information. For example, the determination unit 202 may use a combination of the various types of information to determine, as the receiving position DP, a position which is in the permitted range TA to the permitted distance SD desired by a user and in which the vertical difference between each address RP and the receiving position DP is within the reference vertical difference.

Priority may be added to the various types of information included in the receiving position determining information. In this case, the determination unit 202 executes a process that determines the receiving position DP using high-priority information of the information included in the receiving position determining information. For example, when the permitted range TA to the permitted distance SD desired by a user does not overlap a range in which the vertical difference between the address RP and the receiving position DP is within the reference vertical difference, the determination unit 202 may determine the receiving position DP based on high-priority information.

Of the various types of information included in the receiving position determining information, information used to determine the receiving position DP may be selected by a user. Alternatively, a user may add priority to the various types of information included in the receiving position determining information. In this case, instead of or in addition to the process of step S103, the server device 10 executes a process that obtains information indicating the result of selecting the information used to determine the receiving position DP selected by the user from the receiving position determining information or obtains information indicating the priority added by the user to the various types of information included in the receiving position determining information.

For example, when a user selects, from the receiving position determining information, information indicating the permitted distance SD desired by the user and information indicating the reference vertical difference to determine the receiving position DP, the determination unit 202 uses both the information indicating the permitted distance SD and the information indicating the reference vertical difference to determine the receiving position DP. That is, the determination unit 202 determines, as the receiving position DP, a position in a range where the permitted range TA to the permitted distance SD desired by the user overlaps the range in which the vertical difference between each address RP and the receiving position DP is within the reference vertical difference. When the permitted range TA desired by a user does not overlap the range in which the vertical difference is within the reference vertical difference, the determination unit 202 may determine the receiving position DP based on information to which high priority is added by the user. This allows the delivery control system 1 or 2 to deliver an item to the receiving position DP that further satisfies a condition desired by the user.

Regardless of what a user selects, the delivery control system 1 or 2 may determine the receiving position DP using information to which high priority is added by the provider of service (the provider of a shopping site in this case) from the information included in the receiving position determining information. For example, the service provider may assume the risk of, for example, thunderstorm or torrential rain and add high priority to the evacuation place information 112 of the various types of information included in the receiving position determining information. In this case, when determining that thunderstorm, torrential rain, or the like is occurring or will occur in the future in the area of the address RP of the user based on weather information of the area of the address RP of the user, the determination unit 202 may use the evacuation place information 112 to determine the receiving position DP regardless of what the user selects. This allows the delivery control system 1 or 2 to determine the receiving position DP based on the information that the service provider wants to prioritize.

### Combination of Processes that Exclude User from Receiving Position DP

In the above-described embodiments and the modification, the determination unit 202 uses various excluding conditions included in the receiving position determining information to exclude a user from receiving an item at the receiving position DP together with other users and determine the address RP of that user as the receiving position DP. Instead, for example, the determination unit 202 may exclude a user from being a recipient based on one of the various types of information indicating the excluding conditions included in the receiving position determining information, or may exclude a user from being a recipient based on a combination of the various types of information. More specifically, the determination unit 202 may determine that a user is subject to exclusion when any one of excluding conditions is applied, or may determine that a user is subject to exclusion when the excluding conditions are all applied.

A user may select information used for a process that excludes the user from being a recipient from the various excluding conditions included in the receiving position determining information. In this case, instead of or in addition to the process of step S103, the server device 10 executes a process that obtains information indicating the result of selecting the information used as the excluding condition that has been selected by the users from the receiving position determining information.

Regardless of what a user selects, the delivery control systems 1 and 2 may determine the receiving position DP using the various excluding conditions included in the receiving position determining information specified by a service provider. For example, regardless of what a user specifies, the service provider may instruct the execution of a process that excludes the user from being a recipient using the reference weight from information indicating the excluding conditions included in the receiving position determining information. When determining that the weight of an item ordered by the user is greater than or equal to the reference weight, the determination unit 202 may determine that user as being subject to exclusion regardless of what the user selects and determine the address RP of that user as the receiving position DP. This allows the delivery control systems 1 and 2 to determine the receiving position DP based on the information that the service provider wants to prioritize.

The above-described embodiments may be modified as follows. The above-described embodiments and the following modifications can be combined as long as the combined modifications remain technically consistent with each other.

An occupant (e.g., driver) that operates the delivery machine 20 or 21 may ride in the delivery machine 20 or 21. In this case, the driver of the delivery machine 20 or 21 operates the delivery machine 20 or 21 to travel to the receiving position DP determined by the server device 10 or 11 or determined by the delivery machine 20 or 21.

Even when the delivery machine 20 or 21 travels through autonomous control, an occupant who loads and unloads an item may ride in the delivery machine 20 or 21.

A delivery station worker does not have to load the delivery machine 20 or 21 with an item. Instead, a UGV that travels through autonomous control in the delivery station may gather an item and carries the item. In this case, the management device 30 may control the UGV that travels through autonomous control in the delivery station. Alternatively, the delivery machine 20 or 21 may travel through autonomous control in the delivery station so that the delivery machine 20 or 21 gathers an item and carries the item.

When receiving an order from a user, the UA 45 may send information indicating the user's address to the server device 10 instead of or in addition to the user ID. When a user uses a shopping site for the first time, the UA 45 may obtain information indicating the username, information indicating the user's attribute, and information indicating the user's address in addition to the order.

Order information may include at least the information indicating the receiving position and item information of the record of the customer information DB 111. In this case, the control unit 100 or 100a reads the item information and the information that indicates the receiving position from the identified record, generates the order information, and sends the order information to the management device 30 and the delivery machine 20 or 21. To execute a process that determines the receiving position DP based on the user attribute, the determination unit 202 accesses the server device 10 or 11 to search for the corresponding customer information DB 111, thereby identifying the user attribute.

The server device 10 or 11 does not have to include the operation unit 130. Instead, the client device of the server device 10 or 11 may include the operation unit 130.

In the above-described embodiments, the determination unit 202 executes the process that determines the receiving position DP for the address RP of a user in the same area as the area of the address RP of a user to which the next item will be delivered. Instead, the determination unit 202 may determine the common receiving position DP for two or more addresses RP that are located in the permitted range TA from the address RP of a user to which the next item will be delivered in the addresses RP of multiple users.

For instance, in the example of Fig. 6, the determination unit 202 may determine the common receiving position DP for two or more addresses RP that are located in the predetermined ranges SA from the address RP of user A to which the next item will be delivered. In the above-described embodiments, in the situation of Fig. 6, the determination unit 202 identifies each predetermined range SA for the corresponding one of users A, B, and C and excludes the address RP3 of user C. In this modification, the determination unit 202 once determines the receiving position DP for another address RP on condition that that address RP is within the permitted distance SD of a specific address RP. Thus, as compared with the case of identifying the predetermined ranges SA for all of the addresses RP that are located in the same area, the determination unit 202 reduces the burden on the process that determines the receiving position DP. Accordingly, the delivery control system 1 or 2 allows users to which items are respectively delivered to receive the items at the receiving position DP, thereby limiting a decrease in the delivery efficiency.

In the above-described embodiments, it is assumed that there are user A, which corresponds to the first user, and users B to D, which correspond to the second users. Instead, the determination unit 202 may use the addresses RP of at least two users (first user and second user). The number of addresses RP of users in the determination process of the determination unit 202 is not limited.

The address RP is not limited to where a user resides, and may be an address specified by the user.

### REFERENCE SIGNS LIST

1, 2) Delivery Control System; 10, 11) Server Device; 20, 20-1, 20-2, 21) Delivery Machine, 30) Management Device; 40, 40-1, 40-2, 40-3) Terminal Device; 100, 100a, 200) Control Unit; 102) Movement Instructing Unit; 110, 210) Memory; 112) Evacuation Place Information; 120, 220) Communication Unit; 130) Operation Unit; 202) Determination Unit; 230) Movement Control Unit; 111) Customer Information DB; DP) Receiving Position; RP, RP1, RP2, RP3, RP4) Address; SD, SD1, SD2, SD3) Permitted Distance; SDP, SDP1, SDP2, SDP3, SDP4) Candidate Position

## Claims

1. A delivery control system (1), comprising:
a determination unit (202) that uses receiving position determining information to determine a common receiving position (DP) for delivery addresses (RP), the delivery addresses (RP) including a delivery address (RP) of an item of a first user and a delivery address (RP) of an item of a second user; and
a movement control unit (230) that causes a delivery machine (20) to move to the common receiving position (DP), the delivery machine (20) being loaded with an item indicated by order information related to an order of the item;
wherein the determination unit (202) is configured to:
use the receiving position determining information to identify candidate positions (SDP);
calculate, for each of the candidate positions (SDP), a distance between the candidate position (SDP) and each of the delivery addresses (RP);
calculate, for each of the candidate positions (SDP), as a distance deviation of the candidate position (SDP), a difference between the distance to the delivery address (RP) closest to the candidate position (SDP) and the distance to the delivery address (RP) farthest from the candidate position (SDP); and
determine, as the common receiving position (DP), the candidate position (SDP) with the smallest distance deviation.

2. The delivery control system (1) according to claim 1, wherein
the receiving position determining information includes information related to a permitted distance (SD) between each of the delivery addresses (RP) and the common receiving position (DP), and
the determination unit (202) determines, as the common receiving position (DP), a position within the permitted distance (SD) from the delivery address (RP).

3. The delivery control system (1) according to claim 2, further comprising an obtaining unit that obtains (100), as the information related to the permitted distance (SD), information indicating a distance specified by a user related to the order information.

4. The delivery control system (1) according to any one of claims 1 to 3,
wherein
the receiving position determining information includes information related to a reference weight, and
the determination unit (202) determines, as a receiving position to which the delivery machine is caused to move, the delivery address (RP) related to the item if the item has the reference weight or more.

5. The delivery control system (1) according to any one of claims 1 to 4,
wherein
the receiving position determining information includes information related to a reference volume, and
the determination unit (202) determines, as a receiving position to which the delivery machine is caused to move, the delivery address (RP) related to the item if the item has the reference volume or more.

6. The delivery control system (1) according to any one of claims 1 to 5,
wherein
the receiving position determining information includes information related to a reference required time for movement from each of the delivery addresses (RP) to the common receiving position (DP), and
the determination unit (202) determines, as the common receiving position (DP), a position of the delivery address (RP) where a required time for movement from the delivery address (RP) is within the reference required time.

7. The delivery control system (1) according to any one of claims 1 to 6,
wherein
the receiving position determining information includes information related to an evacuation place that is unaffected by weather, and
the determination unit (202) obtains weather information related to an area of each of the delivery addresses (RP) and determines a position of the evacuation place as the common receiving position (DP) based on the weather information.

8. The delivery control system (1) according to any one of claims 1 to 7,
wherein
the receiving position determining information includes information indicating a reference vertical difference, and
the determination unit (202) identifies a vertical difference from the receiving position to each of the delivery addresses (RP) and determines the delivery address (RP) as the common receiving position (DP) based on the identified vertical difference.

9. The delivery control system (1) according to any one of claims 1 to 8,
wherein
the receiving position determining information includes information related to an attribute of a user who ordered the item, and
the determination unit (202) determines the delivery address of the user who ordered the item as a receiving position to which the delivery machine is caused to move based on the attribute.

10. The delivery control system (1) according to claim 2, wherein the determination unit (202) determines the common receiving position (DP) for two or more of the delivery addresses (RP) that are located in the permitted distance (SD).

11. The delivery control system (1) according to any one of claims 1 to 10, further comprising a notification unit (220) that notifies a user of arrival of the delivery machine (20) after the delivery machine (20) arrives at the common receiving position (DP).

12. A delivery controller, comprising:
a determination unit (202) that uses receiving position determining information to determine a common receiving position (DP) for delivery addresses (RP), the delivery addresses (RP) including a delivery address (RP) of an item of a first user and a delivery address (RP) of an item of a second user; and
a movement instructing unit (120) that instructs a delivery machine (20) to move to the common receiving position (DP), the delivery machine (20) being loaded with an item indicated by order information related to an order of the item;
wherein the determination unit (202) is configured to:
use the receiving position determining information to identify candidate positions (SDP);
calculate, for each of the candidate positions (SDP), a distance between the candidate position (SDP) and each of the delivery addresses (RP);
calculate, for each of the candidate positions (SDP), as a distance deviation of the candidate position (SDP), a difference between the distance to the delivery address (RP) closest to the candidate position (SDP) and the distance to the delivery address farthest from the candidate position (SDP); and
determine, as the common receiving position (DP), the candidate position (SDP) with the smallest distance deviation.

13. A delivery control method, comprising:
using, by a computer, receiving position determining information to determine a common receiving position (DP) for delivery addresses (RP), the delivery addresses (RP) including a delivery address (RP) of an item of a first user and a delivery address (RP) of an item of a second user; and
moving, by the computer, a delivery machine (20) to the common receiving position (DP), the delivery machine (20) being loaded with an item indicated by order information related to an order of the item;
wherein using the receiving position determining information to determine the common receiving position (DP) comprises, by the computer:
using the receiving position determining information to identify candidate positions (SDP);
calculating, for each of the candidate positions (SDP), a distance between the candidate position (SDP) and each of the delivery addresses (RP);
calculating, for each of the candidate positions (SDP), as a distance deviation of the candidate position (SDP), a difference between the distance to the delivery address (RP) closest to the candidate position (SDP) and the distance to the delivery address farthest from the candidate position (SDP); and
determining, as the common receiving position (DP), the candidate position (SDP) with the smallest distance deviation.

## Patentansprüche

1. Liefersteuersystem (1), umfassend:
eine Bestimmungseinheit (202), die Empfangspositionsbestimmungsinformationen verwendet, um eine gemeinsame Empfangsposition (DP) für Lieferadressen (RP) zu bestimmen, wobei die Lieferadressen (RP) eine Lieferadresse (RP) eines Artikels eines ersten Benutzers und eine Lieferadresse (RP) eines Artikels eines zweiten Benutzers einschließen; und
eine Bewegungssteuereinheit (230), die eine Liefermaschine (20) veranlasst, sich zu der gemeinsamen Empfangsposition (DP) zu bewegen, wobei die Liefermaschine (20) mit einem Artikel beladen ist, der durch Bestellinformationen in Bezug auf eine Bestellung des Artikels angegeben ist;
wobei die Bestimmungseinheit (202) konfiguriert ist zum:
Verwenden der Empfangspositionsbestimmungsinformationen, um Kandidatenpositionen (SDP) zu identifizieren;
Berechnen, für jede der Kandidatenpositionen (SDP), einer Entfernung zwischen der Kandidatenposition (SDP) und jeder der Lieferadressen (RP);
Berechnen, für jede der Kandidatenpositionen (SDP), als eine Entfernungsabweichung der Kandidatenposition (SDP), einer Differenz zwischen der Entfernung zu der Lieferadresse (RP), die der Kandidatenposition (SDP) am nächsten liegt, und der Entfernung zu der Lieferadresse (RP), die am weitesten von der Kandidatenposition (SDP) entfernt ist; und
Bestimmen, als die gemeinsame Empfangsposition (DP), der Kandidatenposition (SDP) mit der geringsten Entfernungsabweichung.

2. Liefersteuersystem (1) nach Anspruch 1, wobei
die Empfangspositionsbestimmungsinformationen Informationen in Bezug auf eine zulässige Entfernung (SD) zwischen jeder der Lieferadressen (RP) und der gemeinsamen Empfangsposition (DP) einschließen, und
die Bestimmungseinheit (202), als die gemeinsame Empfangsposition (DP), eine Position innerhalb der zulässigen Entfernung (SD) von der Lieferadresse (RP) bestimmt.

3. Liefersteuersystem (1) nach Anspruch 2, ferner umfassend eine Erhaltungseinheit, die, als die Informationen in Bezug auf die zulässige Entfernung (SD), Informationen erhält (100), die eine Entfernung angeben, die durch einen Benutzer in Bezug auf die Bestellinformationen spezifiziert werden.

4. Liefersteuersystem (1) nach einem der Ansprüche 1 bis 3, wobei
die Empfangspositionsbestimmungsinformationen Informationen in Bezug auf ein Referenzgewicht einschließen und
die Bestimmungseinheit (202), als eine Empfangsposition, zu der die Liefermaschine veranlasst wird, sich zu bewegen, die Lieferadresse (RP) in Bezug auf den Artikel bestimmt, falls der Artikel das Referenzgewicht oder mehr aufweist.

5. Liefersteuersystem (1) nach einem der Ansprüche 1 bis 4, wobei
die Empfangspositionsbestimmungsinformationen Informationen in Bezug auf ein Referenzvolumen einschließen und
die Bestimmungseinheit (202), als eine Empfangsposition, zu der die Liefermaschine veranlasst wird, sich zu bewegen, die Lieferadresse (RP) in Bezug auf den Artikel bestimmt, falls der Artikel das Referenzvolumen oder mehr aufweist.

6. Liefersteuersystem (1) nach einem der Ansprüche 1 bis 5, wobei
die Empfangspositionsbestimmungsinformationen Informationen in Bezug auf eine erforderliche Referenzzeit für die Bewegung von jeder der Lieferadressen (RP) zu der gemeinsamen Empfangsposition (DP) einschließen, und
die Bestimmungseinheit (202), als die gemeinsame Empfangsposition (DP), eine Position der Lieferadresse (RP) bestimmt, bei der eine erforderliche Zeit für die Bewegung von der Lieferadresse (RP) innerhalb der erforderlichen Referenzzeit liegt.

7. Liefersteuersystem (1) nach einem der Ansprüche 1 bis 6, wobei
die Empfangspositionsbestimmungsinformationen Informationen in Bezug auf einen wetterunabhängigen Evakuierungsort einschließen und
die Bestimmungseinheit (202) Wetterinformationen in Bezug auf einen Bereich jeder der Lieferadressen (RP) erhält und basierend auf den Wetterinformationen eine Position des Evakuierungsorts als die gemeinsame Empfangsposition (DP) bestimmt.

8. Liefersteuersystem (1) nach einem der Ansprüche 1 bis 7, wobei
die Empfangspositionsbestimmungsinformationen Informationen einschließen, die eine vertikale Referenzdifferenz angeben und
die Bestimmungseinheit (202) eine vertikale Differenz von der Empfangsposition zu jeder der Lieferadressen (RP) identifiziert und die Lieferadresse (RP) basierend auf der identifizierten vertikalen Differenz als die gemeinsame Empfangsposition (DP) bestimmt.

9. Liefersteuersystem (1) nach einem der Ansprüche 1 bis 8, wobei
die Empfangspositionsbestimmungsinformationen Informationen in Bezug auf ein Attribut eines Benutzers einschließen, der den Artikel bestellt hat, und
die Bestimmungseinheit (202) die Lieferadresse des Benutzers, der den Artikel bestellt hat, als eine Empfangsposition, zu der die Liefermaschine veranlasst wird, sich zu bewegen, basierend auf dem Attribut bestimmt.

10. Liefersteuersystem (1) nach Anspruch 2, wobei die Bestimmungseinheit (202) die gemeinsame Empfangsposition (DP) für zwei oder mehr der Lieferadressen (RP) bestimmt, die sich in der zulässigen Entfernung (SD) befinden.

11. Liefersteuersystem (1) nach einem der Ansprüche 1 bis 10, ferner umfassend eine Benachrichtigungseinheit (220), die einen Benutzer über die Ankunft der Liefermaschine (20) benachrichtigt, nachdem die Liefermaschine (20) an der gemeinsamen Empfangsposition (DP) angekommen ist.

12. Liefersteuerung, umfassend:
eine Bestimmungseinheit (202), die Empfangspositionsbestimmungsinformationen verwendet, um eine gemeinsame Empfangsposition (DP) für Lieferadressen (RP) zu bestimmen, wobei die Lieferadressen (RP) eine Lieferadresse (RP) eines Artikels eines ersten Benutzers und eine Lieferadresse (RP) eines Artikels eines zweiten Benutzers einschließen; und
eine Bewegungsanweisungseinheit (120), die eine Liefermaschine (20) anweist, sich zu der gemeinsamen Empfangsposition (DP) zu bewegen, wobei die Liefermaschine (20) mit einem Artikel beladen ist, der durch Bestellinformationen in Bezug auf eine Bestellung des Artikels angegeben ist;
wobei die Bestimmungseinheit (202) konfiguriert ist zum:
Verwenden der Empfangspositionsbestimmungsinformationen, um Kandidatenpositionen (SDP) zu identifizieren;
Berechnen, für jede der Kandidatenpositionen (SDP), einer Entfernung zwischen der Kandidatenposition (SDP) und jeder der Lieferadressen (RP);
Berechnen, für jede der Kandidatenpositionen (SDP), als eine Entfernungsabweichung der Kandidatenposition (SDP), einer Differenz zwischen der Entfernung zu der Lieferadresse (RP), die der Kandidatenposition (SDP) am nächsten liegt, und der Entfernung zu der Lieferadresse, die am weitesten von der Kandidatenposition (SDP) entfernt ist; und
Bestimmen, als die gemeinsame Empfangsposition (DP), der Kandidatenposition (SDP) mit der geringsten Entfernungsabweichung.

13. Liefersteuerverfahren, umfassend:
Verwenden, durch einen Computer, von Empfangspositionsbestimmungsinformationen, um eine gemeinsame Empfangsposition (DP) für Lieferadressen (RP) zu bestimmen, wobei die Lieferadressen (RP) eine Lieferadresse (RP) eines Artikels eines ersten Benutzers und eine Lieferadresse (RP) eines Artikels eines zweiten Benutzers einschließen; und
Bewegen, durch den Computer, einer Liefermaschine (20) zu der gemeinsamen Empfangsposition (DP), wobei die Liefermaschine (20) mit einem Artikel beladen ist, der durch Bestellinformationen in Bezug auf eine Bestellung des Artikels angegeben ist;
wobei das Verwenden der Empfangspositionsbestimmungsinformationen, um die gemeinsame Empfangsposition (DP) zu bestimmen, durch den Computer umfasst:
Verwenden der empfangenen Positionsbestimmungsinformationen, um Kandidatenpositionen (SDP) zu identifizieren;
Berechnen, für jede der Kandidatenpositionen (SDP), einer Entfernung zwischen der Kandidatenposition (SDP) und jeder der Lieferadressen (RP);
Berechnen, für jede der Kandidatenpositionen (SDP), als eine Entfernungsabweichung der Kandidatenposition (SDP), einer Differenz zwischen der Entfernung zu der Lieferadresse (RP), die der Kandidatenposition (SDP) am nächsten liegt, und der Entfernung zu der Lieferadresse, die am weitesten von der Kandidatenposition (SDP) entfernt ist; und
Bestimmen, als die gemeinsame Empfangsposition (DP), der Kandidatenposition (SDP) mit der geringsten Entfernungsabweichung.

## Revendications

1. Système de commande de livraison (1) comprenant :
une unité de détermination (202) qui utilise les informations de détermination de position de réception pour déterminer une position de réception commune (DP) pour les adresses de livraison (RP), les adresses de livraison (RP) comportant une adresse de livraison (RP) d'un article d'un premier utilisateur et une adresse de livraison (RP) d'un article d'un second utilisateur ; et
une unité de commande de mouvement (230) qui permet à une machine de livraison (20) de se déplacer jusqu'à la position de réception commune (DP), la machine de livraison (20) étant chargée d'un article indiqué par des informations de commande de l'article ;
dans lequel l'unité de détermination (202) est configurée pour :
utiliser les informations de détermination de position de réception pour identifier les positions candidates (SDP) ;
calculer, pour chacune des positions candidates (SDP), une distance entre la position candidate (SDP) et chacune des adresses de livraison (RP) ;
calculer, pour chacune des positions candidates (SDP), en tant qu'écart de distance de la position candidate (SDP), une différence entre la distance jusqu'à l'adresse de livraison (RP) la plus proche de la position candidate (SDP) et la distance jusqu'à l'adresse de livraison (RP) la plus éloignée de la position candidate (SDP) ; et
déterminer, en tant que position de réception commune (DP), la position candidate (SDP) présentant l'écart de distance le plus faible.

2. Système de commande de livraison (1) selon la revendication 1, dans lequel
les informations déterminant la position de réception comportent des informations relatives à une distance autorisée (SD) entre chacune des adresses de livraison (RP) et la position de réception commune (DP), et
l'unité de détermination (202) détermine, en tant que position de réception commune (DP), une position située à l'intérieur de la distance autorisée (SD) par rapport à l'adresse de livraison (RP).

3. Système de commande de livraison (1) selon la revendication 2, comprenant en outre une unité d'obtention qui obtient (100), en tant qu'informations relatives à la distance autorisée (SD), des informations indiquant une distance spécifiée par un utilisateur en rapport avec les informations de commande.

4. Système de commande de livraison (1) selon l'une quelconque des revendications 1 à 3, dans lequel
les informations de détermination de position de réception comportent des informations relatives à un poids de référence, et
l'unité de détermination (202) détermine, en tant que position de réception vers laquelle la machine de livraison est amenée à se déplacer, l'adresse de livraison (RP) liée à l'article si l'article a le poids de référence ou plus.

5. Système de commande de livraison (1) selon l'une quelconque des revendications 1 à 4, dans lequel
les informations de détermination de position de réception comportent des informations relatives à un volume de référence, et
l'unité de détermination (202) détermine, en tant que position de réception vers laquelle la machine de livraison est amenée à se déplacer, l'adresse de livraison (RP) liée à l'article si l'article a le volume de référence ou plus.

6. Système de commande de livraison (1) selon l'une quelconque des revendications 1 à 5, dans lequel
les informations déterminant la position de réception comportent des informations relatives à un temps de référence requis pour le déplacement de chacune des adresses de livraison (RP) vers la position de réception commune (DP), et
l'unité de détermination (202) détermine, en tant que position de réception commune (DP), une position de l'adresse de livraison (RP) où un temps requis pour le déplacement à partir de l'adresse de livraison (RP) est compris dans le temps requis de référence.

7. Système de commande de livraison (1) selon l'une quelconque des revendications 1 à 6, dans lequel
la réception d'informations déterminant la position comporte des informations relatives à un lieu d'évacuation qui n'est pas affecté par les conditions météorologiques, et
l'unité de détermination (202) obtient des informations météorologiques relatives à une zone de chacune des adresses de livraison (RP) et détermine une position du lieu d'évacuation en tant que position de réception commune (DP) sur la base des informations météorologiques.

8. Système de commande de livraison (1) selon l'une quelconque des revendications 1 à 7, dans lequel
les informations de détermination de la position de réception comportent des informations indiquant une différence verticale de référence, et
l'unité de détermination (202) identifie une différence verticale entre la position de réception et chacune des adresses de livraison (RP) et détermine l'adresse de livraison (RP) comme position de réception commune (DP) sur la base de la différence verticale identifiée.

9. Système de commande de livraison (1) selon l'une quelconque des revendications 1 à 8, dans lequel
les informations de détermination de la position de réception comportent des informations relatives à un attribut d'un utilisateur qui a commandé l'article, et
l'unité de détermination (202) détermine l'adresse de livraison de l'utilisateur qui a commandé l'article en tant que position de réception vers laquelle la machine de livraison est amenée à se déplacer sur la base de l'attribut.

10. Système de commande de livraison (1) selon la revendication 2, dans lequel l'unité de détermination (202) détermine la position de réception commune (DP) pour deux ou plusieurs des adresses de livraison (RP) qui sont situées dans la distance autorisée (SD).

11. Système de commande de livraison (1) selon l'une quelconque des revendications 1 à 10, comprenant en outre une unité de notification (220) qui informe un utilisateur de l'arrivée de la machine de livraison (20) après l'arrivée de la machine de livraison (20) à la position de réception commune (DP).

12. Dispositif de commande de livraison, comprenant :
une unité de détermination (202) qui utilise les informations de détermination de position de réception pour déterminer une position de réception commune (DP) pour les adresses de livraison (RP), les adresses de livraison (RP) comportant une adresse de livraison (RP) d'un article d'un premier utilisateur et une adresse de livraison (RP) d'un article d'un second utilisateur ; et
une unité d'instruction de mouvement (120) qui ordonne à une machine de livraison (20) de se déplacer jusqu'à la position de réception commune (DP), la machine de livraison (20) étant chargée d'un article indiqué par des informations relatives à une commande de l'article ;
dans lequel l'unité de détermination (202) est configurée pour :
utiliser les informations de détermination de position de réception pour identifier les positions candidates (SDP) ;
calculer, pour chacune des positions candidates (SDP), une distance entre la position candidate (SDP) et chacune des adresses de livraison (RP) ;
calculer, pour chacune des positions candidates (SDP), en tant qu'écart de distance de la position candidate (SDP), une différence entre la distance jusqu'à l'adresse de livraison (RP) la plus proche de la position candidate (SDP) et la distance jusqu'à l'adresse de livraison la plus éloignée de la position candidate (SDP) ; et
déterminer, en tant que position de réception commune (DP), la position candidate (SDP) présentant l'écart de distance le plus faible.

13. Procédé de commande de livraison, comprenant :
l'utilisation, par un ordinateur, d'informations de détermination de position de réception pour déterminer une position de réception commune (DP) pour les adresses de livraison (RP), les adresses de livraison (RP) comportant une adresse de livraison (RP) d'un article d'un premier utilisateur et une adresse de livraison (RP) d'un article d'un second utilisateur ; et
le déplacement, par l'ordinateur, d'une machine de livraison (20) vers la position de réception commune (DP), la machine de livraison (20) étant chargée d'un article indiqué par des informations relatives à une commande de l'article ;
dans lequel l'utilisation des informations de détermination de la position de réception pour déterminer la position de réception commune (DP) comprend, par l'ordinateur :
l'utilisation des informations de détermination de position reçues pour identifier les positions candidates (SDP) ;
le calcul, pour chacune des positions candidates (SDP), d'une distance entre la position candidate (SDP) et chacune des adresses de livraison (RP) ;
le calcul, pour chacune des positions candidates (SDP), en tant qu'écart de distance de la position candidate (SDP), une différence entre la distance jusqu'à l'adresse de livraison (RP) la plus proche de la position candidate (SDP) et la distance jusqu'à l'adresse de livraison la plus éloignée de la position candidate (SDP) ; et
la détermination, en tant que position de réception commune (DP), de la position candidate (SDP) présentant l'écart de distance le plus faible.
